# EUROPÄISCHE PATENTANMELDUNG

(11) **EP 3 124 184 A1**
(43) Veröffentlichungstag der Anmeldung: **01.02.2017**
(21) Anmeldenummer: 16181960.2
(22) Anmeldetag: 29.07.2016
(51) Int. Cl.: B25J 9/16

(54) **BAUTEILEHANDHABUNGSVORRICHTUNG, VERFAHREN ZUM FÖRDERN VON BAUTEILEN UND SYSTEM**

(30) Priorität: 30.07.2015 DE 102015112566
(71) Anmelder: Zorn Maschinenbau GmbH, 78333 Stockach (DE)
(72) Erfinder: Zeiher, Martin, 78359 Orsingen (DE); Mülhaupt, Tobias, 78355 Hohenfels (DE)
(74) Vertreter: Behrmann, Niels

(57) **Zusammenfassung**

Die Erfindung betrifft eine Bauteilehandhabungsvorrrichtung mit einer Mehrzahl von Behältermitteln (10) zur Aufnahme und Abgabe von Bauteilen, einer eine den Behältermitteln (10) zugeordneten, gemeinsamen Auflagefläche (24) für Bauteile aus den Behältermitteln aufweisenden Trägereinheit (16), optisch wirkenden Identifikationsmitteln (32) zum Erzeugen von Identifikations- und/oder Positionsdaten von auf der Auflagefläche (24) befindlichen Bauteilen, Abnehmermitteln (26, 28) zum selektiven Abnehmen der auf der Auflagefläche (24) befindlichen Bauteile als Reaktion auf die Identifikations- bzw. Positionsdaten, Bewegungsmitteln zum Ausüben einer Impuls- und/oder Vibrationsbewegung auf die Auflagefläche (24) und Entfernungsmitteln (22, 24) zum Fördern einer Mehrzahl der auf der Auflagefläche (24) befindlichen Bauteile.

## Beschreibung

Die vorliegende Erfindung betrifft eine Bauteilehandhabungsvorrichtung nach dem Oberbegriff des Hauptanspruchs. Ferner betrifft die vorliegende Erfindung ein Verfahren zum selektiven Fördern von verschiedenen Bauteilen, und die Erfindung betrifft ein System unter Nutzung einer Bauteilehandhabungsvorrichtung.

Als aus dem Stand der Technik allgemein bekannt vorauszusetzen sind Zuführsysteme für Bauteile verschiedener Geometrien als Bauteilehandhabungsvorrichtungen, welche aus geeigneten, etwa als Magazin oder Bunker ausgebildeten Behältermitteln ausgebrachte Bauteile von einer zugehörigen Auflagefläche abnehmen, nachdem diese Bauteile, üblicherweise mittels geeigneter optischer Identifikationsmittel, in ihrer Art, ihrer Ausrichtung und Position erkannt und identifiziert wurden.

Konkret ist es in diesem Zusammenhang bekannt, der Auflagefläche geeignete Kameramittel mit nachgeschalteter Bilderfassungsfunktionalität zuzuordnen, welche dann, entsprechend einem Abgleich mit gespeicherten Mustern, Formen oder dgl. Referenzdaten, eine Identifikation und Verortung der auf der Auflagefläche befindlichen Bauteile ermöglicht und entsprechend Abnehmermittel, etwa in Form von ansonsten bekannten Roboterarmen mit endseitig vorgesehenen Halte- bzw. Greifmitteln, an eine zugehörige Bauteileposition führt, dort das Bauteil abnimmt und einer nachgeschalteten Verarbeitungsinfrastruktur zuführt, welche typischerweise in der Art von Bauteilemontagevorrichtungen oder Bauteileprüfvorrichtungen vorliegen.

Als aus dem Stand der Technik ferner bekannt ist es vorauszusetzen, eine derartige Auflagefläche einer geeignet den Behältermitteln zugeordneten Trägereinheit bewegbar auszugestalten, insbesondere zum Durchführen einer Vibrations- oder Rüttelbewegung: Insbesondere bei der Verarbeitung von räumlich ungeordneten Massenbauteilen, welche durch Schütten oder dgl. gravitative Verfahren aus einem Behälter auf die Auflagefläche ausgetragen wurden, können Bauteilelagen oder Bauteileorientierungen entstehen, welche mit den (typischerweise elektronisch gespeichert vorliegenden) Referenzdaten nicht übereinstimmen oder auf andere Weise zu Erkennungs- bzw. Erfassungsfehlern führen, wie auch etwa dann, wenn einzelne Bauteile deformiert, beschädigt oder auf andere Weise defekt sind. In diesen Situationen würde ein vorbestimmtes, automatisiertes Rütteln der Trägereinheit (und damit der Auflagefläche) zu einer Umpositionierung bzw. Umorientierung von darauf befindlichen Bauteilen führen, mit der dadurch bewirkten Veränderung eines zu erfassenden optischen Musters. Wenn dieses dann durch die Identifikationsmittel als einem bestimmten Bauteiletyp zugehörig erkannt wird, kann dann die bestimmungsgemäße Weiterverarbeitung des Bauteils erfolgen, so dass durch das als bekannt vorauszusetzende Rütteln eine Fehlerquote in dem Betrieb gattungsgemäßer Vorrichtungen vermindert und eine Effizienz in der automatisierten Förderung und nachfolgenden Nutzung der Bauteile verbessert werden kann.

Allerdings weist diese insoweit als bekannt und generisch vorausgesetzte Technologie, welche insbesondere im Zusammenhang mit preisgünstigen Massenteilen und kleinen Bauteilestückzahlen eingesetzt wird, Verbesserungspotenziale auf, insbesondere im Hinblick auf eine oftmals gewünschte weitere Effizienzverbesserung und Optimierung des Betriebs im Zusammenhang mit mehreren verschiedenen Bauteilen: So ist es bereits durch die als gattungsbildend vorausgesetzte Technologie mittels der Identifikationsmittel prinzipiell ermöglicht, mehrere verschiedene Bauteiltypen voneinander zu unterscheiden und so selektiv durch die Abnehmermittel abzunehmen und bestimmungsgemäß nachfolgend zu verbauen bzw. weiterzuverarbeiten. Allerdings ist die Variationsbreite möglicher zu verarbeitender Bauteile bereits dadurch begrenzt, dass diese, üblicherweise aus verschiedenen Magazinen, Bunkern oder dgl. (Massenteil-) Behältern, auf eine üblicherweise gemeinsam für die verschiedenen Behälter vorgesehene Auflagefläche gebracht werden müssen. Wenn dann, trotz des beschriebenen Umorientierungsprozesses in Form des Rüttelns der Auflagefläche, einzelne Bauteile unidentifiziert bleiben, entstehen zunehmende Probleme auf der Auflagefläche, für die Weiterverarbeitung taugliche Bauteile korrekt, mit geringem Zeitaufwand und betriebssicher zu identifizieren, nicht zuletzt durch das graduelle Auffüllen bzw. Verstopfen der Auflagefläche durch nicht-identifizierte Teile. In einem solchen Fall ist üblicherweise ein manueller Eingriff einer Bedienperson notwendig, welche dann händisch auf die Auflagefläche zugreift, unidentifizierte Bauteile entfernt und diese entweder entsorgt oder, wenn sie noch als brauchbar erkannt werden, manuell in die zugehörigen Behälter zurückführt. Insbesondere jedoch bei vollautomatischen Prozessen, welche auch über viele Stunden ohne menschliche Begleitung bzw. Betreuung ablaufen müssen, ist eine derartige Eingriffnotwendigkeit nachteilig und führt ggf. zu Bearbeitungs- bzw. Produktionsstillstand.

Zusätzlich verschärft wird diese Problematik dadurch, dass es gerade im vorliegenden Kontext kleiner, begrenzter Stückzahlen und bei einer beabsichtigten nachfolgenden Montage oder Verarbeitung verschiedener Produktvarianten, welche jeweils verschiedene Bauteile benötigen, wünschenswert ist, die Varianz der Bauteile (d.h. die prinzipiell verarbeitbare Typenanzahl bzw. Variantenbreite der Bauteile) zu erhöhen, etwa mit dem Zweck, automatisiert die benötigten Bauteile für ein erstes Produkt nach dem Abschluss der zugehörigen Montagearbeiten zu ersetzen durch (oftmals abweichende) Bauteile für ein zweites, nachfolgend zu montierendes Produkt, und zwar vollautomatisiert, etwa während eines nächtlichen Dauerbetriebs, und wiederum ohne die Notwendigkeit eines menschlichen Bedienereingriffs. Hier ist es wiederum als prinzipiell bekannt vorauszusetzen, die Abnehmermittel für den Wechsel der Bauteiletypen so zu konfigurieren, dass etwa der typischerweise eingesetzte Roboterarm verbleibende Bauteile von der Auflagefläche nach deren Identifikation abnimmt und, statt diese an eine nachfolgende Bauteilemontageeinheit weiterzugeben, zurück in jeweils zugehörige Behälter sortiert, da ja der Montageprozess für diese Bauteile abgeschlossen ist und sie insoweit nicht mehr benötigt werden. Allerdings tritt auch hier das vorstehend beschriebene Erkennungs- und Komplexitätsproblem auf, mit der praktischen Konsequenz, dass typischerweise komplexere aufeinanderfolgende Montage- bzw. Bestückungsarbeiten, welche von einem zum nachfolgenden Produkt eine größere Anzahl verschiedener Bauelemente benötigen, in einem gewünschten vollautomatisierten Betriebsmodus der Bauteilehandhabungsvorrichtung praktisch unmöglich sind.

Aufgabe der vorliegenden Erfindung ist es daher, eine als gattungsgemäß bekannt vorauszusetzende Bauteilehandhabungsvorrichtung nach dem Oberbegriff des Hauptanspruchs im Hinblick auf eine Optimierung des Förderverhaltens der verschiedenen Bauteile zu verbessern, dabei insbesondere ein zunehmendes und für ein automatisiertes Erkennen und Abnehmen schädliches Füllen bzw. Verstopfen der Auflagefläche zu verhindern und insbesondere die Voraussetzung dafür schaffen, dass die Bauteilehandhabungsvorrichtung auch für einen Betriebskontext automatisiert zugänglich ist, bei welchem eine erste Varianz verschiedener Bauteile für der Bauteilehandhabungsvorrichtung nachgeschalteter bzw. nachzuschaltender Montage bzw. Prüfeinheiten bei einem Produkt- oder Programmwechsel durch eine andere Varianz von Bauteilen ersetzt wird, ohne dass es eines manuellen Eingriffs, manueller Sortier-, Identifikations- oder Abnehmarbeiten bedarf.

Die Aufgabe wird durch die Bauteilehandhabungsvorrichtung mit den Merkmalen des Hauptanspruchs gelöst. Vorteilhafte Weiterbildungen der Erfindung sind in den Unteransprüchen beschrieben. Zusätzlich Schutz im Rahmen der Erfindung wird beansprucht für ein Verfahren zum selektiven Fördern verschiedener Bauteile aus einer Mehrzahl von Behältermitteln, wobei dieses Verfahren zwar bevorzugt zum Betrieb der erfindungsgemäßen Vorrichtung vorgesehen und geeignet ist, jedoch nicht auf diesen Betrieb beschränkt ist. Gleichermaßen Schutz wird im Rahmen der vorliegenden Erfindung beansprucht für ein System, welches die erfindungsgemäße Baueilehandhabungsvorrichtung mit einem nachgeschalteten, die geförderten Bauteile verarbeiteten Aggregat wie einer Bauteilemontage- und/oder -Prüfvorrichtung kombiniert. Dabei gelten die erfindungsgemäße Vorrichtung weiterbildende Ansprüche bzw. Merkmale als gleichermaßen die unabhängige Verfahrens- und Systemerfindung weiterbildend offenbart.

In erfindungsgemäß vorteilhafter Weise sieht die erfindungsgemäße Lösung zunächst vor, dass eine Mehrzahl von Behältermitteln vorgesehen ist, die zur Aufnahme und Abgabe verschiedener Bauteile eingerichtet bzw. vorgesehen sind, und die die jeweiligen Bauteile an bzw. auf die gemeinsam zugeordnete Auflagefläche der Trägereinheit abgeben. In erfindungsgemäß vorteilhafter und weiterbildender Art ist dann vorgesehen, dass diese Mehrzahl der Behältermittel, welche günstig jeweils etwa als Bunker oder Magazin ausgestaltet sein können, in einer Relativposition zur Aufnahmefläche verfahr- oder verschiebbar sind, wobei diese Relativbewegung entweder durch eine Bewegung der Trägereinheit, ergänzend oder alternativ durch eine Bewegung der (jeweiligen oder aller) Behältermittel realisiert sein kann und diese Relativbewegung, entsprechend einem jeweiligen Einbau- und Anwendungskontext, ganz oder teilweise rotatorisch oder linear erfolgen kann.

Hier wiederum lassen sich dann geeignete vertikale, horizontale oder Mischformen der Bewegung entsprechend dem jeweiligen Einsatzzweck und den baulichen Voraussetzungen gestalten.

Weiterhin erfindungsgemäß weist die Trägereinheit Entfernungsmittel auf, die zusätzlich und üblicherweise separat von den Abnehmermitteln vorgesehen sind, separat von diesen angetrieben bzw. betrieben werden und eine ergänzende Funktionalität bewirken: Mittels dieser erfindungsgemäßen Entfernungsmittel ist es, üblicherweise als Reaktion auf ein zugehöriges Entfernungs-Steuersignal, ermöglicht, eine Mehrzahl von auf der Auflagefläche befindlichen Bauteile gemeinsam und/oder gleichzeitig von dieser Auflagefläche zu einer Restbauteileaufnahmeeinheit zu entfernen, welche selbst (z.B. durch konstruktive oder bauliche Maßnahmen) von den Behältermitteln getrennt ist, so dass die auf diese Weise entfernten Bauteile nicht unmittelbar in die Behältermittel geführt werden. Üblicherweise werden zudem die erfindungsgemäßen Entfernungsmittel so ausgestaltet und betrieben, dass das erfindungsgemäße Fördern der Bauteile von der Auflagefläche (d.h. das Entfernen oder Abräumen) sämtliche, sich zu einem Aktivierungszeitpunkt der Entfernungsmittel noch auf der Auflagefläche befindliche Bauteile betrifft. Mit anderen Worten, die Erfindung gestattet es, zu vorbestimmten Zeitpunkten bzw. Gelegenheiten während eines Förderprozesses bzw. eines Produktionsablaufs in vollständig automatisierter Weise die Auflagefläche von defekten oder auf andere Weise unerkannten Bauteilen zu befreien und damit die Voraussetzung für einen weiteren fortgesetzten und effizienten Förder- (d.h. Abnahme- und Sortier-) Betrieb ohne menschlichen Bedienereingriff zu schaffen. Dabei nimmt die Erfindung bewusst den Umstand in Kauf, dass durch das erfindungsgemäße Entfernen, d.h. den Betrieb der Entfernungsmittel beim Bewegen mehrerer, bevorzugt aller, verbleibender Bauteile in die Restbauteileaufnahmeeinheit, Ineffizienzen in der Bauteilenutzung entstehen, nämlich möglicherweise Gutteile, die lediglich nicht automatisiert erkannt wurden, auf diese Weise zunächst aus dem Förderprozess entfernt und potenziell entsorgt werden. Allerdings ist unter dem Gesichtspunkt einer vollautomatisierten, damit zeitlich prinzipiell unbegrenzten und menschlich unbeobachteten Betriebsfunktionalität dieser scheinbare Nachteil deutlich weniger problematisch als der dadurch realisierte Vorteil, dass nämlich, insbesondere bei einem regelmäßigen Aktiveren der Entfernungsmittel bei zunehmender unidentifizierter Belegung der Auflagefläche und/oder bei einem Wechsel der Bauteilevarianten, etwa einem Produktwechsel in der nachgeschalteten Bauteilemontagemaschine, manuelle Benutzereingriffe unnötig werden, damit ein kontinuierlicher automatisierter Dauerbetrieb der Vorrichtung gewährleistet ist. Hinzu kommt der Umstand, dass eine (allerdings zeitlich nicht mit dem Betrieb verknüpfte) manuelle Auswertung oder Sortierung des Inhalts der Restbauteileaufnahmeeinheit ohne weiteres ermöglicht ist, so dass - zunächst entfernte bzw. entsorgte, gleichwohl brauchbare - Bauteile nach externer Sichtung und Sortierung wieder in die Behältermittel zurückgeführt werden könnten.

Der Umstand, dass erfindungsgemäß die mit der Trägereinheit zusammenwirkenden und die Bauteile von der Auflagefläche entfernenden Entfernungsmittel zumindest abschnittsweise mechanisch unabhängig von den Abnehmermitteln ausgebildet sind, bedeutet in einer bevorzugten Ausführungsform der Erfindung, dass gesonderte mechanische Aggregate diese Aufgabe ausführen, wobei eine besonders bevorzugte Realisierungsform darin besteht, die ohnehin zum Ausüben der Impuls- bzw. Vibrationsbewegung auf die Auflagefläche eingerichteten erfindungsgemäßen Bewegungsmittel zusätzlich für diesen Entfernungszweck einzusetzen. Gemäß dieser bevorzugten Weiterbildung können dann nämlich diese Bewegungsmittel in einem gesonderten Entfernungs-Betriebsmodus so betrieben werden, dass, etwa durch das Ausführen einer Kippbewegung oder einer Impuls- bzw. Vibrationsbewegung mit erhöhter Amplitude dann die Bauteile nicht mehr auf der Auflagefläche verbleiben, sondern entsprechend der erfindungsgemäßen Entfernungsfunktionalität von dieser zur erfindungsgemäßen Restbauteileaufnahmeeinheit ab- bzw. ausgetragen werden.

Zusätzlich erfindungsgemäß weiterbildend ist es in diesem Zusammenhang vorteilhaft, die Auflagefläche mit einer geeigneten Umrandung bzw. Umrahmung zu versehen, welche etwa dann, durch gesteuertes Bewegen oder Entfernen eines Abschnitts dieser Umrahmung, eine Richtung dieses Austrags beim Entfernen bestimmt und so eine Zuordnung etwa einer als Aufnahmebehälter ausgestalteten Restbauteileaufnahmeeinheit zur Trägereinheit gestattet. Dabei liegt es im Rahmen der jeweiligen Anforderungen für einen Anwendungszweck, Größe, Umfangskontur und dann auch eine solche Umrahmung bzw. deren gezielte Öffnung so auszugestalten, dass einerseits, während der Impuls- bzw. Vibrationsbewegung durch die Bewegungsmittel zu den Zwecken der Lage-, Positions- und/oder Richtungsveränderung der Bauteile diese auf der Auflagefläche verbleiben, lediglich in der vorbeschriebenen Weise deren Identifizier- und Erfassbarkeit verbessert wird. Dagegen würde zum Realisieren der Erfindungsmittel gezielt das Entfernen, d.h. das Abtragen, der Bauteile von der Auflagefläche in die Restbauteileaufnahmeeinheit erreicht.

Im Rahmen denkbarer alternativer Ausgestaltungen der Erfindung liegt es dabei auch, die Abnehmermittel mittels zusätzlicher Aggregate, hier der weiterbildungsgemäß vorgesehenen Mitnehmermittel, zur Realisierung der erfindungsgemäßen Entfernungsmittel auszugestalten; insoweit ist als "zumindest abschnittsweise mechanisch unabhängig" auch eine Ausgestaltung der Abnehmermittel selbst, also z.B. eines Roboterarms, zu verstehen, welche mit Hilfe dieser zusätzlichen Aggregate, hier der Mitnehmermittel, die Entfernungsfunktionalität gemäß der Erfindung erreicht.

In der plausiblen praktisch-technischen Realisierung würde etwa zu diesem Zweck ein Roboterarm als Abnehmermittel eine - z.B: stangen- oder holmartig ausgebildete - Baugruppe zugeordnet aufweisen, welche dann durch Bewegungsantrieb des Roboterarms, sich parallel zur Oberfläche der Auflagefläche erstreckend angetrieben wird und auf diese Weise dann als Mitnehmer das Entfernen (Abräumen) der aufliegenden Bauteile, in der jeweiligen Antriebsrichtung, zu der Restbauteileaufnahmeeinheit realisiert.

Davon unbeeinflusst bleibt die erfindungsgemäß weiterbildend vorgesehene Funktionalität der Abnehmermittel, also etwa des Roboterarms mit entsprechend ausgestalteten Abnehmer- bzw. Griffaggregaten für die Bauteile, neben dem erfindungsgemäßen Fördern dieser Bauteile zu der nachgeschalteten Bauteilemontage- bzw. Prüfeinheit auch ein gezieltes Rückführen bzw. Rücksortieren der Bauteile in die jeweils zugehörige der Behältermittel vorzunehmen. Ein derartiger Betrieb ist weiterbildend insbesondere dann sinnvoll und vorteilhaft, wenn bei einem beabsichtigten Wechsel eines durch die nachgeschaltete Bauteilemontageeinheit zu montierenden Produkts und damit einem Wechsel der hierfür notwendigen Bauteile verbleibende und noch erfindungsgemäß durch die Identifikationsmittel identifizierbare Bauteile auf der Auflagefläche verbleiben - vor einem abschließenden und vollständigen Entfernen durch die Entfernungsmittel würden dann durch die Abnehmermittel in diesem Betriebsmodus zunächst diese noch identifizierbaren Bauteile in die jeweils zugehörigen Behältermittel zurückgeführt, statt im Rahmen des Betriebs der Entfernungsmittel zu der Restbauteileaufnahmeeinheit entfernt (entsorgt) zu werden.

Im Ergebnis gestattet damit diese weiterbildungsgemäße Funktionalität der Aggregate der erfindungsgemäßen Vorrichtung eine große Flexibilität in der Gestaltung eines automatisierten, flexiblen und effizienten Handhabungs- und Verarbeitungsprozesses für die Mehrzahl der Bauteile.

Eine wiederum weiterbildungsgemäß besonders bevorzugte Ausführungsform der Erfindung sieht vor, nicht nur der Trägereinheit Beleuchtungsmittel so zuzuordnen, dass durch diese Beleuchtungsmittel die Identifikationsfunktionalität der erfindungsgemäßen optisch wirkenden Identifikationsmittel erleichtert wird, zusätzlich weiterbildend ist es insbesondere günstig, die Auflagefläche selbst, in Form einer (bezogen auf die aufliegenden Bauteile) bodenseitigen Durchleuchtung, in der Art eines Leuchttisches auszugestalten und so den üblicherweise mittels einer elektronischen Kamera oder dgl. Bildaufnahmemitteln von oben wirkenden Einheit als Identifikationsmittel bestmögliche Kontrast- und Konturbilder für die zuverlässige Identifikation der Bauteile anzubieten.

In der Integration in ein gesamthaftes System, bei welcher die Bauteilehandhabungsvorrichtung unmittelbar mit einer nachgeschalteten Bauteilemontageeinheit oder einer Bauteileprüfeinheit zusammenwirkt, werden die vorstehend im Zusammenhang mit der Erfindung und deren Weiterbildungen diskutierten Vorteile besonders deutlich: Es lässt sich insbesondere nämlich eine Lösung für einen vollautomatisierten Förderbetrieb von Bauteilen verschiedener Art schaffen, welcher flexibel an unterschiedliche Verarbeitungsbedürfnisse durch entsprechende verschiedene Varianten der Bauteile anpassbar ist und wirksam eine Gefahr vermeidet, dass durch diesen Variantenreichtum erhöhte Komplexität die prinzipielle Funktionalität der teilebezogenenen Abnahme und Förderung jeweils benötigter Bauteile von der Auflagefläche behindert.

Vorteilhafte Wirkung ist wiederum, dass selbst bei lang andauernden Betriebsprozessen eine Überwachung und/oder ein Eingriff durch Bedienpersonen überflüssig wird, so dass mit gattungsgemäßen Fördervorgängen verbundene industrielle Produktions- und Prüfprozesse wirtschaftlicher, störungsärmer und, im Gesamtbild, effizienter durchgeführt werden.

Weitere Vorteile, Merkmale und Einzelheiten der Erfindung ergeben sich aus der nachfolgenden Beschreibung bevorzugter Ausführungsbeispiele sowie anhand der Figuren; diese zeigen in:
- Fig. 1: eine Perspektivansicht auf wesentliche Funktionskomponenten der Bauteilehandhabungsvorrichtung gemäß einem ersten Ausführungsbeispiel der Erfindung;
- Fig. 2: eine Seitenansicht auf das Ausführungsbeispiel der Fig. 1 (bei entfernter Kameravorrichtung als Identifikationsmittel);
- Fig. 3: eine Draufsicht auf die Bauteilehandhabungsvorrichtung des Ausführungsbeispiels der Fig. 1, Fig. 2;
- Fig. 4: eine stirnseitige Ansicht auf die Behältermittel mit davor linear verfahrbar angeordneter Trägereinheit und
- Fig. 5: eine perspektivische Teilansicht auf die im Rahmen des ersten Ausführungsbeispiels der Fig. 1 bis 4 verwendeten Trägereinheit mit Auflagefläche im losgelösten, unmontierten Zustand.

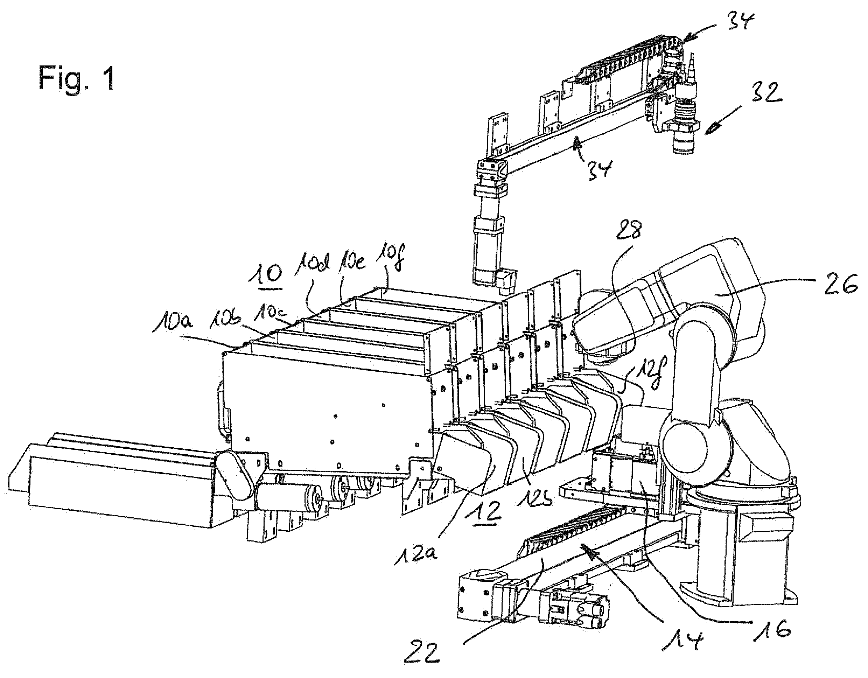

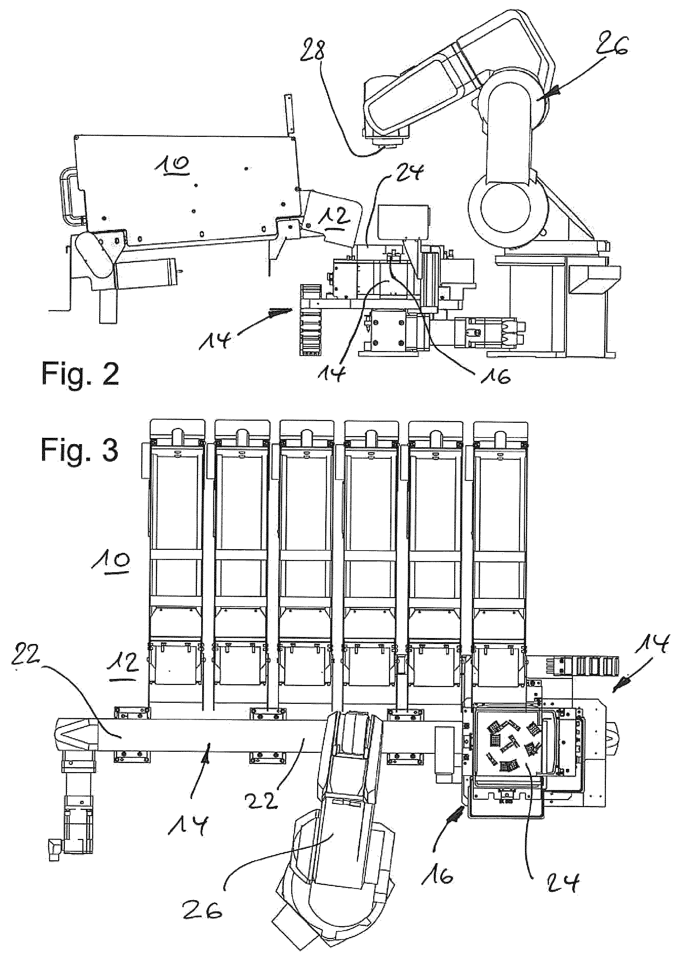

Die Figuren 1 bis 4 verdeutlichen die konstruktive Realisierung der wesentlichen Funktionskomponenten der Bauteilhandhabungsvorrichtung des gezeigten Ausführungsbeispiels sowie deren Zusammenwirken.

Eine Parallelanordnung aus sechs bunkerartigen, jeweils ein Montagebauteil, z.B. Elektronikbauteil, als Schüttgut aufnehmenden Behältern 10a bis 10f weist jeweils an einer ersten, vorderseitigen Schmalseite einen Auslass 12a...12f in Richtung auf eine zugeordnete, entlang einer Führungseinheit 14 quer zu den Behältern verfahrbar angeordnete Trägereinheit 16 auf. Wie die Perspektivansicht der Fig. 1 verdeutlicht, können die jeweiligen Behälter 10a bis 10f an ihrer dem frontseitigen Auslass entgegengesetzten rückseitigen Ende in Richtung auf zugeordnete Lagerbehälter geöffnet werden etwa durch ein Anheben der in der Fig. 1 erkennbaren rückwärtigen Wände. Die Behälter weisen jeweils bodenseitig integrierte Förderbänder auf, die, als Reaktion auf eine geeignete Ansteuerung, das Bewegen und Austragen der Bauteile in Richtung auf bzw. über den jeweiligen Auslass 12 bewirken können. Dagegen gestattet eine Ansteuerung in umgekehrter Bewegungsrichtung das gezielte Leeren eines jeweiligen Behälters durch die (geöffnete) rückwärtige Wand.

Durch Verfahren der Trägereinheit 16 in der Art eines Schlittens auf einem Längsträger 22 des Linearantriebs 14 ist eine Relativpositionierung der Trägereinheit und insbesondere einer durch die Trägereinheit realisierten Auflagefläche 24, relativ zu bzw. vor einem jeweiligen der Behälter 10 bzw. dem zugehörigen Auslass 12 möglich. In dieser Position erfolgt dann, durch geeignete und nicht im Detail erläuterte Ansteuerung eines den Auslass 12 öffnenden Schiebers bzw. eines im jeweiligen Bunker vorgesehenen Förderbandes, das Austragen der Schüttgut-Bauteile aus dem jeweiligen Bunker (Behälter) auf die davor befindliche Auflagefläche. Aufgrund der nachfolgend zu erläuternden Förder-, Sortier- und Rückführungsfunktionalität im Rahmen der Erfindung kommt es dabei auf eine genaue Zählung oder Messung einer Quantität aufgebrachter Bauteile nicht an.

Entsprechend einem jeweiligen Bauteileerfordernis einer der gezeigten Handhabungsvorrichtung der Fig. 1 bis 4 nachgeschalteten Bauteilemontagevorrichtung (in welcher dann mittels der geförderten Bauteile konkrete Produkte hergestellt werden, etwa Leiterplatten mittels der Bauteile bestückt werden) kann die Auflagefläche 24, nach entsprechendem Verfahren bzw. Positionieren der Trägereinheit 16 vor andere der Behälter 10, zusätzliche Bauteile eines zweiten, dritten oder weiteren Typs aufgebracht erhalten.

Die Figuren 1 bis 3 zeigen, im Ausführungsbeispiel und bezogen auf die Querschiene 22 den Behältern 10a...10f gegenüberliegend, Abnehmermittel in Form eines mehrachsig antreib- und bewegbaren Roboterarms 26, welcher, wie die Behälter, an einer fixen Montageposition vorgesehen ist und einen endseitig des Arms vorgesehenen Halte- bzw. Greifabschnitt 28 aufweist, welcher einerseits, durch die Geometrie und Beweglichkeit des Armes, an jeder Verschiebeposition der Trägereinheit 16 entlang des Trägers 22 auf die Oberfläche 24 zugreifen kann und zusätzlich so ausgestaltet ist, dass, etwa mittels mechanischer Klemmmittel oder Magnetfunktionalität entsprechend den abzunehmenden Bauteilen, diese sicher gegriffen und gefördert werden können. Etwa durch ein Verschwenken des Roboterarms (Abnehmermittel) gelangen dann die so typischerweise einzeln aufgenommen Bauteile zu der nachgelagerten Produktionseinheit, etwa der Montagemaschine (in den Figuren nicht gezeigt).

Diese Aufnahme- und Förderfunktionalität des Roboterarms (Abnehmermittel) wird ermöglicht durch von einer vorgeschalteten Steuereinheit erzeugte Steuerbefehle, welche wiederum das Ergebnis einer hier optisch ausgebildeten Identifikation der auf der Auflagefläche 24 befindlichen und entsprechend ihrer Kontur, Lage und/oder Farbgebung identifizierten Bauteile ist.

Genauer gesagt zeigt die Fig. 1, wie oberhalb der Trägereinheit 16, und weiter bevorzugt synchron bzw. fluchtend mit dieser verfahrbar, Kameramittel 32 an einer zugeordneten Kameraträger- und Bewegungseinheit 34, ausgebildet als i.W. parallel zur Schiene 22 verlaufende Querschiene, so vorgesehen sind, dass in einer jeweiligen Position diese Kameramittel 32 von oben auf die Auflage 24 gerichtet sind und dort dann eines oder mehrere elektronische Bilder des aus den aufliegenden Bauteilen entstehenden Musters aufnehmen. Eine dieser Kameraeinheit nachgeschaltete Bildauswerte- und -analyseeinheit (nicht gezeigt) erzeugt dann Identifikations- und Positionsdaten des oder der auf der Auflagefläche erfassten Bauteile, zumindest in dem Umfang, wie Analyseinformationen des Kamerabildes nach Abgleich mit (etwa in einer Datenbank abgelegten) Referenzdarstellungen oder Referenzmustern eine Übereinstimmung ergeben, welche dann die bestimmungsgemäße Identifikation eines Bauteils als zu einer bestimmten Variante oder einem Typ gehörig sowie dessen Lokalisierung auf der Fläche 24 zulassen.

Entsprechend dieser durch die Kameramittel 32 ermöglichten Identifikations- und Positionserfassungsfunktionalität ist damit ein konkretes Abnehmen eines beabsichtigten bzw. entsprechend dem nachgeschalteten Montage- und/oder Prüfprozess erforderlichen Bauteils von der Auflagefläche ermöglicht, so dass die Abnehmermittel (Roboterarm mit ansitzendem Greifabschnitt) die Förderung zu dieser nachgelagerten Infrastruktur bewirken können.

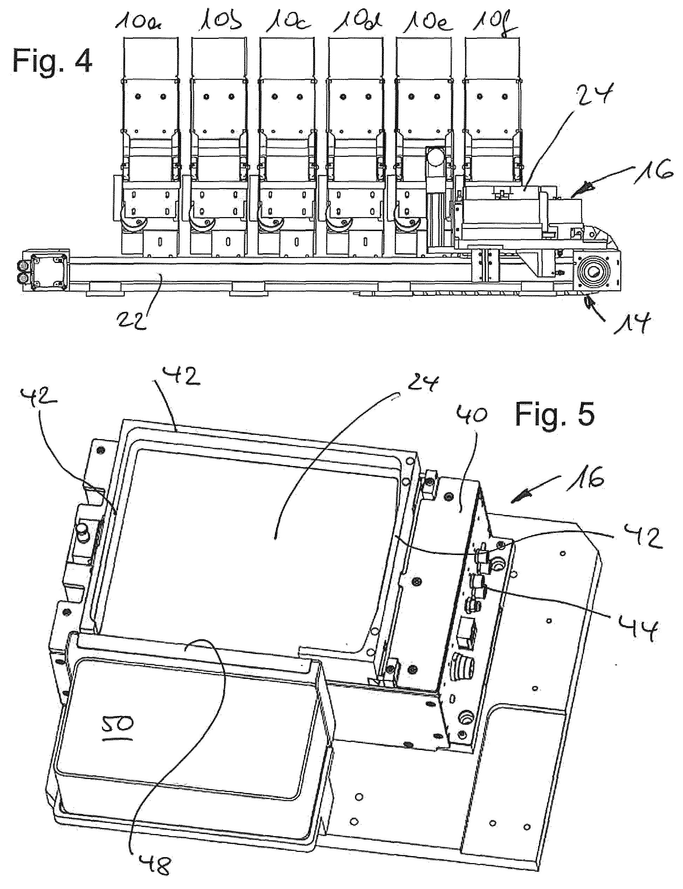

Sollte es, insbesondere in einem lang andauernden Betrieb der Vorrichtung mit der beschriebenen Identifikations- und Abnahmefunktionalität, zu Identifikationsfehlern oder anderen Zuordnungsproblemen des tatsächlich von der Kamera erfassten Bildes der Auflagefläche mit konkreten Identifikationsdaten von Bauteilen kommen, also gewisse, auf der Auflagefläche befindliche Objekte unidentifiziert bleiben und nicht konkreten Bauteilvarianten oder -typen zuzuordnen sein, sieht die Bauteilehandhabungsvorrichtung des gezeigten Ausführungsbeispiels eine impuls- bzw. rüttelartige Bewegung der Auflagefläche durch entsprechende Antriebsfunktionalität (Bewegungsmittel) der Trägereinheit vor. Dies wird im Zusammenhang mit der Detailansicht der Trägereinheit der Fig. 5 erläutert.

Gezeigt ist die im Ausführungsbeispiel der Fig. 1-4 verbaute Trägereinheit 16, welche auf der Oberfläche eines Gehäuses 40 die Auflagefläche 24 ausbildet. Diese Auflagefläche, etwa realisiert als Flachseite und obenliegende Wand des Gehäuses 40 mit einer integrierten Beleuchtungsfunktionalität eines Leuchttisches, ist randseitig eingefasst von einer Umrandung 42 und wird bodenseitig durch im Gehäuse 40 (nicht im Detail gezeigt) vorgesehene Antriebsmittel, etwa geeignete Vibrationsgeber oder dgl. oszillierende Stellelemente, in die gewünschte, zum Positionsverändern aufliegender Bauteile geeignete Schüttelbewegung versetzt, als Reaktion auf geeignete Steuersignale, welche etwa über eine Schnittstelle 44 in das Gehäuse durch geeignete, nicht gezeigte Kabelanbindungen gebracht werden können. Die Umrandung 42 ist an einer Längsseite unterbrochen und von einem (bezogen auf die Trägereinheit 16 bzw. das Gehäuse 40) vertikal bewegbaren Wandabschnitts 48 verschlossen. Dieser Wandabschnitt, im gezeigten Betriebszustand der Fig. 5, verschließt die Umrandung 42, so dass insbesondere während des beschriebenen, Positionsveränderungen und Orientierungsveränderungen von aufliegenden Bauteilen bewirkenden Vibrations- bzw. Schüttelbetriebs diese Baueile nicht unbeabsichtigt von der Auflagefläche fallen können.

Wird dann jedoch, durch gesonderte Ansteuerung in einen Entfernungsbetrieb (insoweit realisiert die in Fig. 5 gezeigte Anordnung dann die erfindungsgemäßen Entfernungsmittel) der Wandabschnitt 48 abgesenkt, erhält die Umrandung 42 an dieser Stelle einen Durchbruch zu einem dem Gehäuse 40 benachbart auf der Trägereinheit angeordneten Restbauteileaufnahmebehälter 50. Unterstützt durch eine Ansteuerung der Bodenbewegung der Auflagefläche 24 mit großer Vibrationsamplitude oder großem Hub, ergänzend oder alternativ durch ein Neigen oder Verkippen dieses Bodens in Richtung auf den Behälter 50, können dann sämtliche sich zum betreffenden Betriebszeitpunkt noch auf der Fläche befindlichen Bauteile in den Behälter 50 ausgetragen werden, so dass am Ende dieses Entfernungsbetriebs eine leere, von Bauteilen unbeaufschlagte Auflagefläche 24 vorliegt, welche dann wiederum, analog der oben beschriebenen Vorgänge, erneut mit Bauteilen eines oder mehrerer Typen aus den Behältern 10 beschickt werden kann.

Diese beschriebene Funktionalität der Entfernungsmittel lässt sich, im Rahmen des Fördereinsatzes der gezeigten Vorrichtung, prinzipiell zu verschiedenen Zeitpunkten anstoßen. Üblicherweise dürfte dies einerseits der Fall sein, wenn im Rahmen regelmäßiger Handhabungsvorgänge von auf die Auflagefläche 24 gebrachter Bauteile Fehlidentifikationen bzw. Bauteilefehler (letztendlich können auch defekte Bauteile zu einer Fehlidentifikation führen, nicht nur eine falsche oder unglückliche Positionierung oder ein Verhaken mehrerer Bauteile) dazu führen, dass die Auflagefläche nicht mehr effizient für das regelmäßige, bevorzugt getaktete Abnehmen der Bauelemente und Weiterfördern geeignet ist. In diesem Fall würde dann das Aktivieren der Entfernungsmittel dazu führen, dass sämtliche sich auf der Auflagefläche aktuell befindlichen Bauteile in die Restbauteileaufnahmeeinheit 50 eingetragen werden, wobei diese dann, getrennt vom laufenden Betrieb, entweder entsorgt oder, nach manueller Überprüfung durch eine Bedienperson für Gutteile, zum Rezyklieren in der Behälteranordnung 10a...10f je nach Bauteil, führen kann. Auch ist ein solches Entfernen (auch als Freiräumen der Auflagefläche anzusehen) sinnvoll, wenn automatisiert und insbesondere ohne vorgesehenen manuellen Eingriff ein Wechsel von Produkttypen zur weiteren Förderung ansteht, was insbesondere dann der Fall ist, wenn eine nachgeschaltete Anlage oder ein nachgeschaltetes Aggregat, etwa die diskutierte Bauteilemontageeinheit, einen Produktwechsel des zu montierenden Produkts vornimmt und entsprechend die zugehörigen und zu fördernden Bauteile sich ändern. Auch in diesem Fall würde dann effizient, ohne die Notwendigkeit manuellen Eingriffs und betriebssicher durch Aktivieren der Entfernungsmittel, der Handhabungsvorgang unbeeinträchtigt von störenden, fehlerhaften und/oder unidentifizierten Bauteilen beginnen können.

Auch angesichts der erfindungsgemäßen Funktionalität der Entfernungsmittel, im gezeigten Ausführungsbeispiel realisiert durch den Träger 16 mit darauf ausgebildete, angetriebener Auflagefläche 24, schließt nicht aus, dass die Abnehmermittel, also der gezeigte Roboterarm 26 mit ansitzendem Greifabschnitt für Bauteile, diese gezielt nach deren Identifikation aufnimmt und, statt dann das Fördern zur nachgeschalteten Montageeinheit zu bewirken, diese Bauteile in den jeweils zugehörigen Behälter 10 zurückgibt. Ein derartiger Betrieb ist insbesondere sinnvoll, um vor dem diskutierten Produktwechsel, d.h. dem geplanten Handhaben neuer Bauteiletypen und -Varianten, die Auflagefläche von nicht mehr benötigten Bauteilen zu bereinigen, und ein (typischerweise bauteileweises) Zurückführen dieser Bauteile durch den Roboterarm in die zugehörigen Behälter vor einem anschließenden Abräumen bzw. Entfernen verbleibender (typischerweise dann nicht identifizierter oder identifizierbarer) Bauteile durch die Entfernungsmittel vermindert potenziellen Ausschuss in die Restbauteileaufnahmeeinheit.

Es wird aus der obigen Beschreibung des Ausführungsbeispiels sowie der damit ermöglichten Betriebsvarianten deutlich, dass die vorliegende Erfindung nicht auf die konkret gezeigte konstruktive Variante beschränkt ist, noch auf die lediglich exemplarisch beschriebenen Abläufe. Vielmehr liegt es im Belieben des Fachmannes, die Erfindung auf einen jeweiligen Einsatzkontext physisch und im Hinblick auf einen durchzuführenden Betriebsablauf zu konfigurieren, wobei die Möglichkeiten, nicht nur im Hinblick auf eine Anordnung und Anzahl von Bauteilen samt zugehörigen Behältern, nahezu unbegrenzt sind.

## Patentansprüche

1. Bauteilehandhabungsvorrrichtung mit
zur Aufnahme und Abgabe von Bauteilen ausgebildeten Behältermitteln (10a...10f),
einer den Behältermitteln zugeordneten, eine Auflagefläche (24) für Bauteile aus den Behältermitteln anbietenden Trägereinheit (16),
der Auflagefläche zugeordneten, bevorzugt optisch wirkenden Identifikationsmitteln (32) zum Erzeugen von Identifikations- und/oder Positionsdaten von auf der Auflagefläche befindlichen Bauteilen und der Trägereinheit zugeordneten Abnehmermitteln (26, 28), die zum selektiven, bevorzugt bauteileweisen Abnehmen der auf der Auflagefläche (24) befindlichen Bauteile als Reaktion auf die Identifikations- bzw. Positionsdaten und zum Fördern eines abgenommenen Bauteils zu einer nachgeschalteten oder nachschaltbaren Bauteilemontage- und/oder Prüfeinheit ausgebildet sind,
wobei der Trägereinheit Bewegungsmittel zum Ausüben einer Impuls- und/oder Vibrationsbewegung auf die Auflagefläche (24) so zugeordnet sind, dass die auf der Auflagefläche befindlichen Bauteile als Reaktion auf eine Aktivierung der Bewegungsmittel eine Lage-, Positions- und/oder Richtungsveränderung auf der Auflagefläche erfahren,
**dadurch gekennzeichnet,**
**dass** eine Mehrzahl der Behältermittel vorgesehen, zur Aufnahme und Abgabe verschiedener Bauteile ausgebildet und der Trägereinheit (16) gemeinsam zugeordnet ist,
wobei die Trägereinheit zusätzlich zu den Abnehmermitteln (26) vorgesehene und zumindest abschnittsweise mechanisch unabhängig von diesen ausgebildete Entfernungsmittel aufweist, die zum bevorzugten simultanen Fördern eine Mehrzahl der auf der Auflagefläche (24) befindlichen, weiter bevorzugt aller auf der Auflagefläche befindlichen, Bauteile zu einer der Trägereinheit zugeordneten, unabhängig von der nachgeschalteten bzw. nachschaltbaren Bauteilemontage- bzw. -Prüfeinheit sowie von den Behältermitteln vorgesehenen Restbauteileaufnahmeeinheit (50) ausgebildet sind.

2. Vorrichtung nach Anspruch 1, **dadurch gekennzeichnet, dass** die Mehrzahl der bevorzugt bunker- oder magazinartig ausgestalteten Behältermittel linear und/oder rotatorisch relativ zu der Trägereinheit (16) verfahrbar angeordnet ist.

3. Vorrichtung nach Anspruch 1 oder 2, **dadurch gekennzeichnet, dass** die Abgabe der Bauteile aus den Behältermitteln mittels bevorzugt behältereigener Förderbandmittel und/oder als gravitatives Austragen und/oder Schütten auf die Auflagefläche realisiert ist.

4. Vorrichtung nach einem der Ansprüche 1 bis 3, **dadurch gekennzeichnet, dass** die optisch wirkenden Identifikationsmittel elektronische Bildaufnahmemittel (32) aufweisen, die zum Zusammenwirken mit auf die Trägereinheit wirkenden Beleuchtungsmitteln, bevorzugt der als Leuchttisch ausgestalteten Auflagefläche, ausgebildet sind.

5. Vorrichtung nach einem der Ansprüche 1 bis 4, **dadurch gekennzeichnet, dass** die Abnehmermittel einen endseitig einen Bauteilehalterabschnitt (28) aufweisenden, bevorzugt mehrachsig antreibbaren Arm, insbesondere Roboterarm (26) aufweisen.

6. Vorrichtung nach einem der Ansprüche 1 bis 5, **dadurch gekennzeichnet, dass** die Entfernungsmittel mittels der Bewegungsmittel so realisiert sind, dass in einem zusätzlichen Betriebsmodus der Bewegungsmittel eine Mehrzahl der auf der Auflagefläche befindlichen Bauteile, bevorzugt alle auf der Auflagefläche befindlichen Bauteile, von der Auflagefläche fallen, weiter bevorzugt in einer vorbestimmten Richtung und/oder über eine vorbestimmte Kante der Auflagefläche von dieser bewegt werden.

7. Vorrichtung nach Anspruch 6, **dadurch gekennzeichnet, dass** die insbesondere mit Beleuchtungsmitteln versehene und/oder als Leuchttisch ausgebildete Auflagefläche (24) eine bevorzugt randseitige Begrenzung (42, 48) zum Bestimmen einer Richtung der Bauteileentfernung aufweist.

8. Vorrichtung nach einem der Ansprüche 1 bis 7, **dadurch gekennzeichnet, dass** die Abnehmermittel (26) zum bevorzugten bauteileweisen Abnehmen und Fördern eines Bauteils in ein zugehöriges der Behältermittel ausgebildet sind.

9. Vorrichtung nach einem der Ansprüche 1 bis 8, **dadurch gekennzeichnet, dass** die Abnehmermittel zum Realisieren der Entfernungsmittel durch an einem Abschnitt der Abnehmermittel bevorzugt lösbar vorsehbare Mitnehmermittel für das Fördern der Mehrzahl der Baueile von der Auflagefläche zu der Restbauteileaufnahmeeinheit ausgebildet sind.

10. Verfahren zum selektiven Fördern von verschiedenen Bauteilen aus einer Mehrzahl von den verschiedenen Bauteilen jeweils zugeordneten Behältermitteln, insbesondere Verfahren zum Betreiben der Bauteilehandhabungsvorrichtung nach einem der Ansprüche 1 bis 9, **gekennzeichnet durch** die Schritte:
- Austragen einer Mehrzahl verschiedener der Bauteile aus den Behältermitteln auf eine Auflagefläche einer der Mehrzahl der Behältermittel gemeinsam zugeordneten Trägereinheit aus der Mehrzahl der Behältermittel;
- Selektives, insbesondere bauteileweises Abnehmen von Bauteilen von der Auflagefläche mittels der Trägereinheit zugeordneten Abnehmermitteln als Reaktion auf eine optische Positionserfassung und/oder Identifikation der Bauteile auf der Auflagefläche sowie nachfolgendes Übergeben der abgenommenen Bauteile zu einer nachgeschalteten Bauteilemontage- und/oder -Prüfeinheit;
- Impulsartiges und/oder vibrierendes Bewegen der Auflagefläche zum Bewirken einer Lage-, Positions-, und/oder Richtungsveränderung von auf der Auflagefläche liegenden Bauteilen auf der Auflagefläche; und
- Simultanes Entfernen einer Mehrzahl von auf der Auflagefläche liegenden Bauteilen, insbesondere Entleeren der Auflagefläche, zu einer separat von der Bauteilemontage- bzw. -Prüfeinheit vorgesehenen Restbauteileaufnahmeeinheit.

11. Verfahren nach Anspruch 10, **dadurch gekennzeichnet, dass** das simultane Entfernen und/oder Entleeren durch eine von dem impulsartigen bzw. vibrierenden Bewegen abweichende Bewegung der Auflagefläche, insbesondere ein Verkippen der Auflagefläche in eine vorbestimmte Kipprichtung, bewirkt wird.

12. System bestehend aus der Bauteilehandhabungsvorrichtung nach einem der Ansprüche 1 bis 9 und einer der Bauteilehandhabungsvorrichtung nachgeschalteten Bauteilemontage- und/oder -Prüfeinheit für durch die Bauteilehandhabungsvorrichtung geförderte Bauteile, wobei die Bauteilemontage- bzw. -Prüfeinheit zum Aufeinanderfolgenden automatisierten Verarbeiten der Bauteile in voneinander abweichenden Varianten der Bauteile ausgebildet ist.
